# EUROPEAN PATENT SPECIFICATION

(11) **EP 0 841 979 B1**
(45) Date of publication and mention of the grant of the patent: **19.03.2003**
(21) Application number: 97918467.8
(22) Date of filing: 16.04.1997
(51) Int. Cl.: B01D 46/52, B01D 27/06

(54) **FILTER WITH MOUNTING FRAME AND MOUNTING DEVICES**
FILTER MIT EINBAURAHMEN UND EINBAUVORRICHTUNGEN.
FILTRE MUNI D'UN CADRE ET DE DISPOSITIFS DE MONTAGE

(30) Priority: 16.04.1996 SE 9601435
(43) Date of publication of application: 20.05.1998
(73) Proprietor: Dinair AB, 500 02 Boras (SE)
(72) Inventor: ÖDLING, Patrik, S-592 30 Vadstena (SE)
(74) Representative: Andersson, Per Rune
(86) International application number: SE9700644
(87) International publication number: WO97038782

(56) References cited:
- EP-A- 0 465 843
- GB-A- 1 291 613
- US-A- 4 056 375
- US-A- 4 325 718

## Description

### TECHNICAL FIELD:

The present invention relates to a device in air filter cartridges of so-called bag filter type where, in connection with so-called closed cycle thinking, it is desired to sort parts from the filter cartridge at source and reuse them.

### BACKGROUND OF THE INVENTION:

Air filter cartridges are previously known, and normally comprise some kind of frame unit which sometimes, for stiffening purposes, is provided with a wire grating such a filter cartridge is disclosed in EP-A-0 465 843. In these earlier air filter cartridges the filter medium is fully supported by the attachment which has been applied between the frame sides and the filter medium. The sides of attachment frame/filter may for instance be sheet metal strips and/or metal staples, but typically the attachment must be arranged along the entire length of the frame side portions. The reason why the frame attachment must be done so properly is that the entire pressure (tensile load) at the entrance of the filter cartridge is received at the edge attachment.

### SUMMARY OF THE INVENTION:

The object of the invention is to be able to mount or detach such a filter medium unit as described above, so that cartridge change, inclusive sorting at source, functions in a simple way in practice. This is achieved by means of a device according to claim 1.

### BRIEF DESCRIPTION OF THE DRAWINGS:

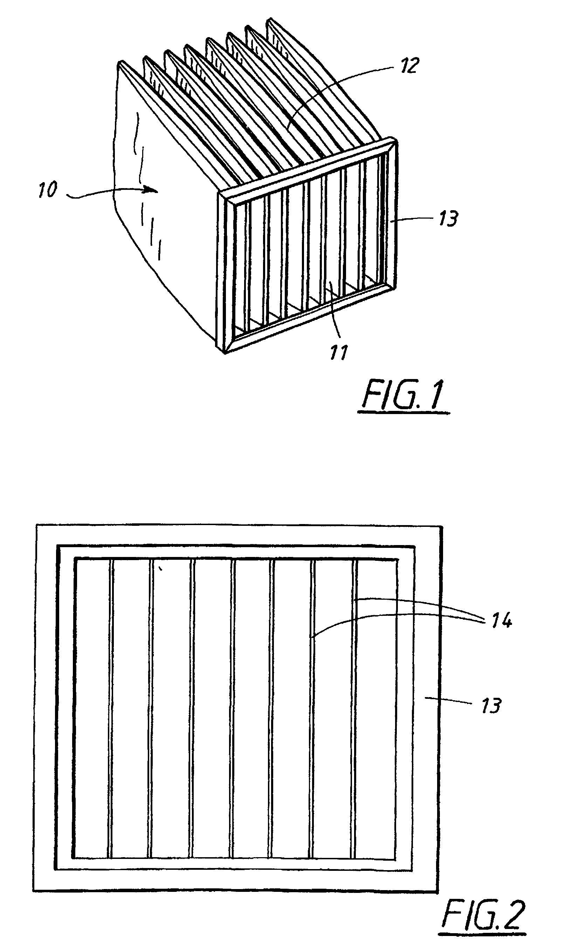

In the following, the invention will be described in greater detail with reference to the attached drawings, in which
- Fig. 1: is a perspective view of a complete air filter cartridge,
- Fig. 2: is a front view of a frame/grating unit,
- Fig. 3: is a sectional view of the air filter cartridge,
- Fig. 4: shows a blank for a cartridge part,
- Fig. 5: shows the same blank folded and sewn up,
- Fig. 6: shows a partial perspective view of a portion of filter media plus several grating wires,
- Fig. 7: is a perspective view of filter media according to a second embodiment,
- Fig. 8: shows the first step when mounting filter media according to the second embodiment, and
- Figs. 9 and 10: are further views showing the mounting of filter media into a frame.

### PREFERRED EMBODIMENTS:

The present invention is intended to provide an air filter cartridge 10, wherein the pressure/tensile load, caused by air flowing there through, is distributed over a larger area at the entrance 11 within the outer edge of the filter.

This pressure distribution is achieved by means of allowing the filter medium 12 to be supported by a wire grating 14, inserted into the frame 13. Because of this, no attachment of the filter edges has to be arranged along the entire length of the frame side portions. Sealing is obtained by means of placing a so-called foam seal in the frame side portions and this seal only has to be fixed at one or a few points.

Recesses 15 are made at the short sides of the respective filter part 16, in order to ensure that the supporting forces do end up on the grating 14 and its parts. In this way, the seam line/supporting line 17 will be situated lower than the corner side portions 18, and will therefore, for natural reasons, be the lines where the pressure forces are received.

By means of letting the grating be a carrier of the filter medium, a situation is achieved in which the tensile load will not burden the outer periphery/frame attachment, but instead the grating and the entire area of the entrance.

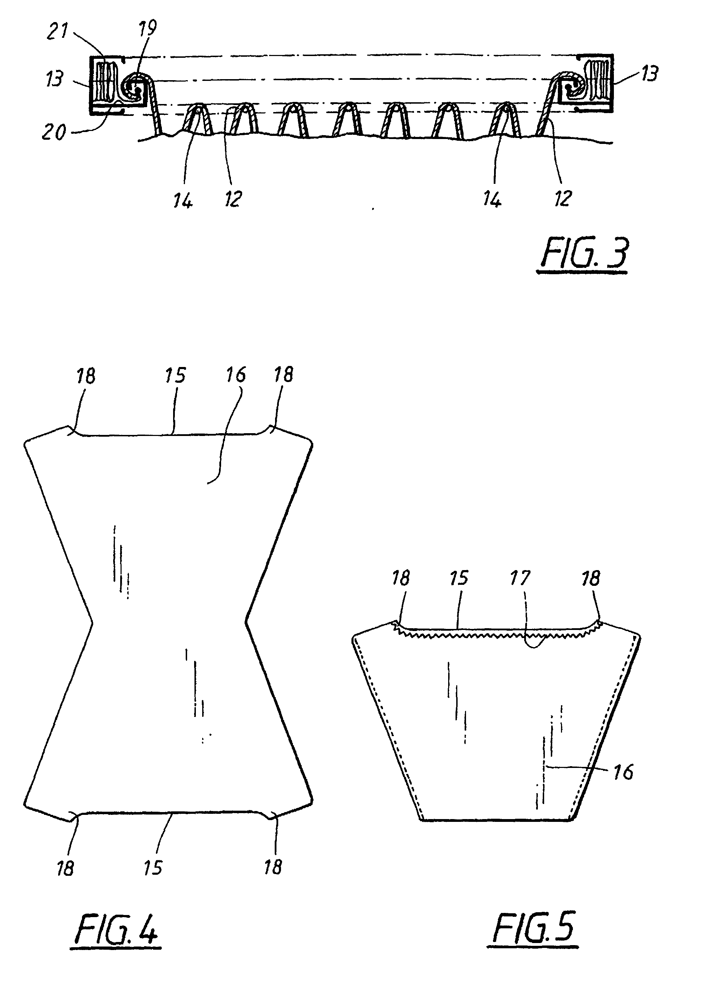

The filter medium 12 may, according to what is shown in Fig. 3, be provided along the periphery with an elastic fixing device 19, e.g. in the form of a rubber band. This fixing device 19 may interact with a holding device 20 in the frame side portions, which makes it possible to, rapidly and easily, fix the filter edges in a releasable manner.

An expandable hygiene sealing 21, e.g. out of thin plastic, may also be present along the outer periphery of the filter medium and come into use when the soiled filter medium is to be replaced.

In order to more easily be able to mount and/or detach a filter medium unit as described above, the device described in the following may be optionally used.

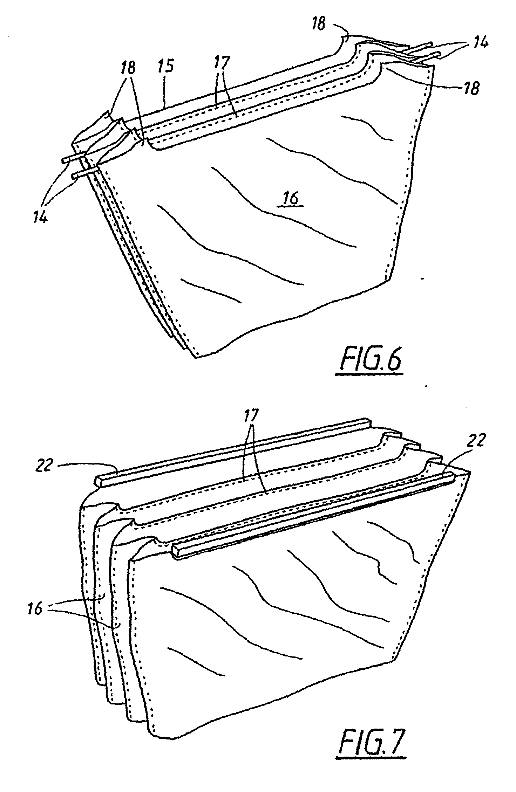

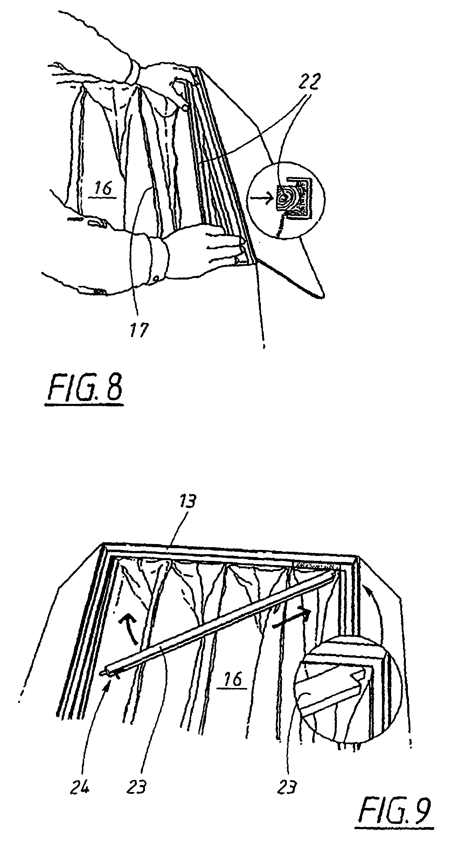

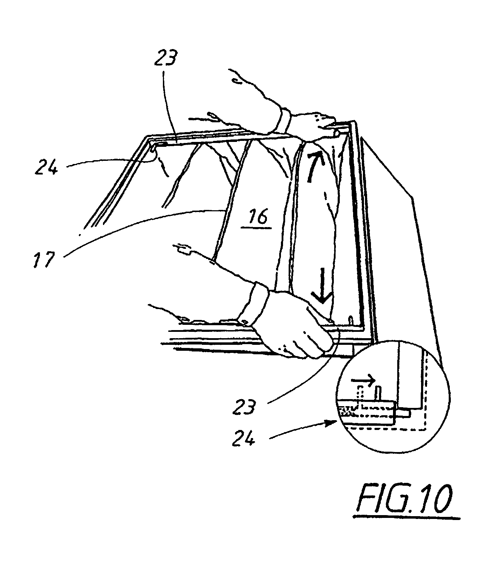

In order to replace the above-described elastic fixing device 19, intended to hold filter media in a firm and sealed way, more or less stiff mounting ribs may be utilised in order to ensure such holding. This method is shown in Figs. 7-10.

Such an optional fixing of filter media in the frame may be achieved by e.g. mounting stiff edge ribs/side members 22 along the outer edge of the filter media part 16 which, when sewing up several filter blanks, will be positioned along the respective outer edge. For reasons of manufacturing technique, this stiffening rib 22 is attached to the filter medium 12 in parallel to the joining seams 17 of the filter blanks.

When the filter medium 12 and its ribs 22, firmly mounted at two outer sides, have been placed in the filter frame, the construction is fixed and complemented by inserting removable fixing ribs 23 along the remaining two side edges. These ribs 23 may be more or less resilient and/or elastic, either along their entire linear length or merely at one or both ends.

When detaching filter media, it is very easy to release the two resilient ribs 23 in the last described embodiment. These released ribs 23 may, together with the frame 13, be reused directly when soiled filter media are replaced by a new unit, for which reason the work proceeds very rapidly and simply.

The described construction is easy to use, since neither any particular force nor any tools have to be utilized.

The frame does not have to be manufactured from material which is as strong as hitherto has been necessary, since the major part of the pressure/tensile load is received by the wire grating 14 and the ribs 22 and 23, respectively, stiffen/reinforce the frame 13.

## Claims

1. Blank for air purification filter comprising short sides with corner side portions (18),
**characterized in that** recesses (15), provided at both short sides of the filter blank, are intended to form a seam line (17) when sewn to an adjacent filter blank, which seam line (17) is intended to, as a supporting line (17), be lower than the corner side portions (18) of the filter blank.

2. Filter unit comprising at least one filter blank according to claim 1,
**characterized in that** the number of filter blanks which have been joined to form one unit are placed into a frame (13) with a wire grating (14), whereby the grating (14) supports the major part of the pressure/tensile load.

3. Filter unit according to claim 2,
**characterized in that** an elastic fixing device (19), interacting with a device (20) in the filter frame, is situated along the outer side edges of the combined unit.

4. Filter unit according to claim 2,
**characterized in that** an expandable hygiene sealing (21) is inserted in the filter frame (13).

5. Filter unit according to claim 2,
**characterized in that** a stiffening edge rib (22) is mounted along the two respective outer edges of the unit.

6. Filter unit according to claim 2,
**characterized in that** two ribs (23), elastic and/or resilient are provided with a resilient catch, are arranged for the stiffening of the two remaining side portions of the unit in relation to the frame.

## Patentansprüche

1. Zuschnitt für einen Luftreinigungsfilter , der kurze Seiten mit Eckseitenabschnitten (18) aufweist, **dadurch gekennzeichnet, dass** Ausnehmungen (15), die an beiden kurzen Seiten des Filterzuschnitts vorhanden sind, zur Bildung einer Saumlinie (17) nach Nähen an einen benachbarten Filterzuschnitt vorgesehen sind, wobei die Saumlinie (17) als Versteifungslinie (17) niedriger als die Eckseitenabschnitte (18) des Filterzuschnitts vorgesehen ist.

2. Filtereinheit mit wenigstens einem Filterzuschnitt nach Anspruch 1,
**dadurch gekennzeichnet, dass** die Zahl der Filterzuschnitte, die zur Bildung einer Einheit verbunden worden sind, in einem Rahmen (13) mit einem Drahtgeflecht (14) angeordnet sind, wobei das Geflecht (14) den Hauptabschnitt der Druck-/Zugbelastung aufnimmt.

3. Filtereinheit nach Anspruch 2,
**dadurch gekennzeichnet, dass** eine mit einer Einrichtung (20) in dem Filterrahmen zusammenwirkende elastische Befestigungseinrichtung (19) längs der Außenseitenränder der zusammengesetzten Einheit angeordnet ist.

4. Filtereinheit nach Anspruch 2,
**dadurch gekennzeichnet, dass** eine ausdehnbare hygienische Dichtung (21) in den Filterrahmen (13) eingesetzt ist.

5. Filtereinheit nach Anspruch 2,
**dadurch gekennzeichnet, dass** eine versteifende Randrippe (22) längs der beiden entsprechenden Außenränder der Einheit montiert ist.

6. Filtereinheit nach Anspruch 2,
**dadurch gekennzeichnet, dass** zwei Rippen (23), welche elastisch und/oder federnd mit einem federnden Haken versehen sind, zur Aussteifung der beiden verbleibenden beiden Abschnitte der Einheit bezüglich des Rahmens angeordnet sind.

## Revendications

1. Ebauche pour filtre de purification d'air comportant des côtés courts avec des parties latérales de coin (18),
**caractérisée en ce que** des renfoncements (15), prévus au niveau des deux côtés courts de l'ébauche de filtre, sont prévus pour former une ligne de couture (17) lorsqu'ils sont cousus à une ébauche de filtre adjacente, laquelle ligne de couture (17) est prévue pour, en tant que ligne de support (17), être plus basse que les parties latérales de coin (18) de l'ébauche de filtre.

2. Unité de filtre comportant au moins une ébauche de filtre selon la revendication 1,
**caractérisée en ce que** le nombre d'ébauches de filtre qui ont été reliées pour afin de former une unité est placé dans un cadre (13) avec une grille en fil (14), de sorte que la grille (14) supporte la majeure partie de la charge de pression/tension.

3. Unité de filtre selon la revendication 2,
**caractérisée en ce qu'**un dispositif de fixation élastique (19), qui interagit avec un dispositif (20) dans le cadre de filtre, est situé le long des bords latéraux extérieurs de l'unité combinée.

4. Unité de filtre selon la revendication 2,
**caractérisée en ce qu'**une étanchéité hygiénique expansible (21) est insérée dans le cadre de filtre (13).

5. Unité de filtre selon la revendication 2,
**caractérisée en ce qu'**une nervure de bord de raidissement (22) est montée le long de deux bords extérieurs respectifs de l'unité.

6. Unité de filtre selon la revendication 2,
**caractérisée en ce que** deux nervures (23) élastiques et/ou résilientes sont pourvues d'un verrou élastique, et sont prévues pour la rigidification des deux parties latérales restantes de l'unité par rapport au cadre.
